# EUROPÄISCHE PATENTSCHRIFT

(11) **EP 1 548 986 B1**
(45) Veröffentlichungstag und Bekanntmachung des Hinweises auf die Patenterteilung: **06.05.2015**
(21) Anmeldenummer: 04029831.7
(22) Anmeldetag: 16.12.2004
(51) Int. Cl.: H04L 12/28

(54) **Bussystem für ein Flugzeug**
Bus system for an airplane
Système de bus pour un avion

(30) Priorität: 23.12.2003 DE 10360856
(43) Veröffentlichungstag der Anmeldung: 29.06.2005
(73) Patentinhaber: Airbus Operations GmbH, 21129 Hamburg (DE)
(72) Erfinder: Scherer, Thomas, Dr., 22559 Hamburg (DE); von Döhlen, Volker, Dr., 22607 Hamburg (DE)
(74) Vertreter: Maiwald Patentanwalts GmbH

(56) Entgegenhaltungen:
- EP-A1- 0 940 954
- DE-A1- 4 129 205
- DE-A1- 10 029 645
- ROBERT BOSCH GMBH: "CAN specification, Version 2.0" 1991, ROBERT BOSCH GMBH , STUTTGART , XP002346344 * Seite 4 - Seite 9 * * Seite 42 - Seite 49 *

## Beschreibung

Die vorliegende Erfindung betrifft ein Bussystem zur Übertragung eines Datenpaketes zwischen einer Vielzahl von Geräten in einem Flugzeug, ein Flugzeug mit einem Bussystem für Übertragungen des Datenpaketes zwischen einer Vielzahl von Geräten sowie ein Verfahren zur Übertragung eines Datenpaketes auf einem Bussystem zwischen einer Vielzahl von Geräten in einem Flugzeug.

Im Flugzeug hat sich für die Datenübertragung zwischen verschiedenen Systemen/Geräten der ARINC 429-Standard etabliert. Hierbei existiert pro Datenbus stets nur ein Sender (Monomaster-Bus), der unidirektionale Daten an einen oder mehrere Empfänger überträgt. Für jeden Sender ist daher stets ein separater ARINC 429-Datenbus erforderlich.

Der aus der Automobilindustrie stammende CAN (Controller Area Network) Standard bietet die Möglichkeit der bidirektionalen Kommunikation sowie des parallelen Zugriffs zwischen mehreren System/Geräten unterschiedlicher Kritikalität auf einem gemeinsamen Übertragungsmedium. Beim CAN-Datenbussystem erfolgt die Identifikation eines Datenpaketes ("CAN-Datenframe") durch den "CAN-Identifier". Der CAN-Standard nach DIN ISO 11898 definiert hierzu wahlweise einen "Standard-Identifier" mit einer Länge von 11 Bits oder alternativ einen "Extended Identifier" mit einer Länge von 29 Bits.

Es ist eine Aufgabe der vorliegenden Erfindung, ein Bussystem zur Übertragung eines Datenpaketes zwischen einer Vielzahl von Geräten in einem Flugzeug anzugeben, das eine Kommunikation für sicherheitskritische Funktionen des Flugzeuges sicherstellt.

Controller-Area-Network; Grundlagen, Protokolle, Bausteine, Anwendungen; Konrad Etschberger, Januar 2002, Hanser Verlag offenbart Implementierungen verschiedener Anwendungsschichten im Zusammenhang mit CAN-Bussen. EP 0 940 954 A1 und DE 100 29 645 A1 offenbaren die Implementierung von CAN-Bussen in Flugzeugen.

Die Erfindung wird definiert durch die angehängten Ansprüche.

Gemäß einem Ausführungsbeispiel der vorliegenden Erfindung wird diese Aufgabe mit einem Bussystem gelöst, das ein CAN-Datenbussystem ist. Das Datenpaket in dem CAN-Datenbussystem weist ein erweitertes Identifikationsfeld mit einer Länge von 29 Bit auf, um einen Empfänger des Datenpaketes zu identifizieren. Ein fester Bereich des erweiterten Identifikationsfeldes ist zur Identifikation der Vielzahl von Flugzeugsystemen ausgestaltet, wodurch jedes Flugzeugsystem eindeutig adressierbar ist.

Dadurch wird in vorteilhafter Art und Weise ermöglicht, dass eine Vielzahl von Applikationen und (Sub-)Systemen unterschiedlicher Kritikalität auf dem gleichen Bussystem identifiziert werden können. Dadurch, dass ein fester Bereich des erweiterten Identifikationsfeldes zur Identifikation der Flugzeugsysteme ausgestaltet ist, wird eine eindeutige Zuordnung der Datenpakete ermöglicht, wodurch auch eine Sicherstellung der Kommunikation für sicherheitskritische Funktionen erzielt werden kann. Darüber hinaus ist das Bussystem gemäß der vorliegenden Erfindung erweiterbar, beispielsweise durch Hinzufügen weiterer Geräte, ohne dass eine Softwaremodifikation bei bereits existierenden Geräten erforderlich wird, so dass eine Flexibilität bei der kundenspezifischen Konfiguration ermöglicht wird. Auch ist das Bussystem gemäß der vorliegenden Erfindung für zukünftige neue Anwendungen erweiterbar.

Gemäß einem vorteilhaften Ausführungsbeispiel der vorliegenden Erfindung sind Bits der höchsten Signifikanz, d.h. die höherwertigsten Bits des erweiterten Identifikationsfeldes zur Festlegung einer Priorität des Datenpaketes ausgestaltet, so dass ein Flugzeugsystem mit hoher Kritikalität mit einer hohen Datenpaketpriorität adressiert werden kann.

Gemäß einem weiteren vorteilhaften Ausführungsbeispiel der vorliegenden Erfindung sind Bits der niedrigsten Signifikanz, d.h. die niederwertigeren Bits des erweiterten Identifikationsfeldes zur Angabe einer System-ID ausgestaltet, die vorzugsweise 6 Bit aufweist, wobei diese System-ID entsprechenden ATA-Kapiteln zugeordnet ist.

Weitere vorteilhafte Ausführungsbeispiele der vorliegenden Erfindung ergeben sich aus den Unteransprüchen.

Im Folgenden werden Ausführungsbeispiele der vorliegenden Erfindung unter Bezugnahme auf die begleitenden Figuren beschrieben.
- Fig. 1: zeigt eine vereinfachte Darstellung eines Ausführungsbeispiels des Bussystems gemäß der vorliegenden Erfindung;
- Fig. 2: zeigt eine vereinfachte Darstellung eines Ausführungsbeispiels eines erweiterten Identifikationsfeldes eines Datenpaketes in einem Bussystem gemäß der vorliegenden Erfindung;
- Fig. 3: zeigt eine Tabelle, die beispielhaft Zuordnungen zwischen der System-ID und ATA-Kapiteln gemäß der vorliegenden Erfindung auflistet.

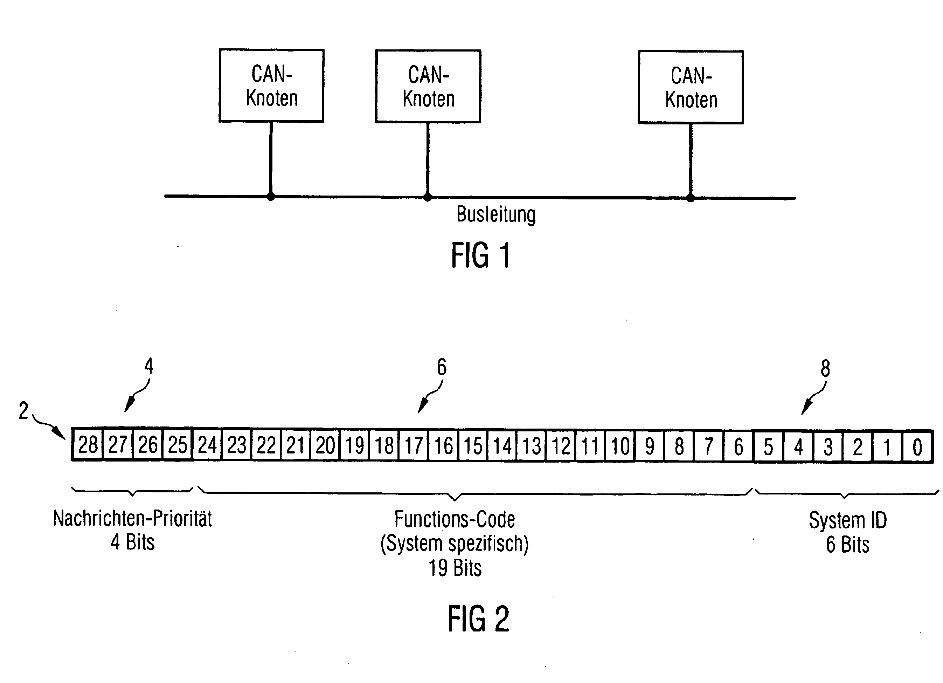

Fig. 1 zeigt eine vereinfachte Darstellung eines Bussystems gemäß einem Ausführungsbeispiel der vorliegenden Erfindung. Insbesondere ist das Bussystem gemäß der vorliegenden Erfindung für die Anwendung in Flugzeugen ausgestaltet. Im großen Umfang entspricht das Bussystem gemäß der vorliegenden Erfindung den CAN-Standard nach DIN ISO 11898, wobei jedoch die erfindungsgemäßen Unterschiede, wie im Folgenden dargelegt, bestehen.

Wie Fig. 1 zu entnehmen ist, ist das Bussystem gemäß dieses Ausführungsbeispiels ein Kommunikationssystem, das mehrere gleichberechtigte Komponenten (Knoten, Nodes) beispielsweise über einen Zweidrahtbus miteinander verbindet. Die CAN-Knoten sind jeweils mit den zwei Drähten des Bussystems verbunden.

Das Bussystem ist zur bidirektionalen Kommunikation sowie zum parallelen Zugriff mehrerer Knoten ausgestaltet. Die Knoten können unterschiedliche Kritikalität aufweisen. Die Knoten greifen alle auf das gleiche Übertragungssystem, d.h. auf die gleiche Busleitung zu.

Insbesondere in einem Flugzeug ist die Unterscheidung von Systemen oder Knoten unterschiedlicher Kritikalität wesentlich. Ein Ausfall beispielsweise einer Kabinenbeleuchtung ist mit einer anderen Priorität zu handhaben wie ein gleichzeitig auftretender Ausfall der Engine-Controls. Dementsprechend wird gemäß der vorliegenden Erfindung ein Identifikationsfeld des Datenpaketes das eine höhere Priorität aufweist, mit einer höheren Nachrichtenpriorität versehen (z.B. das Datenpaket, das die Engine-Controls betrifft) als beispielsweise ein niederpriorisiertes Datenpaket (das beispielsweise eine Kabinenbeleuchtung betrifft).

Bei der Datenübertragung werden nicht die einzelnen Knoten adressiert, sondern der Inhalt einer Nachricht wird durch einen eindeutigen Identifier gekennzeichnet. Neben der Inhaltskennzeichnung wird, wie zuvor schon angesprochen, die Priorität des Datenpaketes festgelegt. Mit der dann folgenden Akzeptanzprüfung stellen alle Stationen, d.h. alle an der Busleitung angeschlossenen Geräte oder Knoten nach korrektem Empfang der Nachricht anhand des Identifiers fest, ob die empfangenen Daten für sie relevant sind oder nicht. Durch die inhaltsbezogene Adressierung wird eine hohe Flexibilität erreicht. Es lassen sich sehr einfach Stationen zum bestehenden Datensystem hinzufügen.

Außerdem ergibt sich die Möglichkeit des Multicastings. Eine Nachricht kann von mehreren Teilnehmern gleichzeitig empfangen und ausgewertet werden. Messgrößen, die beispielsweise von mehreren Steuergeräten als Informationen benötigt werden, können über das Bussystem so verteilt werden, dass nicht jedes Steuergerät einen eigenen Sensor benötigt.

Jeder Teilnehmer, d.h. jedes Flugzeugsystem oder jedes Gerät, das an der Busleitung angeschlossen ist, darf Daten ohne besondere Aufforderung irgend eines Masters verschicken. Wie beispielsweise beim Ethernet kann es hier zu Kollisionen kommen, die allerdings per Hardware gelöst werden können und durch Wiederholung behoben werden können. Eine Kollision wird dadurch erkannt, dass ein Sender den gesendeten Identifier selbst zurückliest und vergleicht. Bei Ungleichheit war ein Teilnehmer mit höherer Priorität da, welcher die Leitung an irgend einer Stelle in den dominanten Pegel gezogen hat.

Der Identifier mit der niedrigsten Binärzahl hat somit die höchste Priorität.

Den Vorgang zur Kollisionsprüfung über den Identifier kann man auch als "bitweise Arbitrierung" bezeichnen. Entsprechend einem "Wired and Mechanisms", bei dem der dominante Zustand auf der Busleitung (logisch Null) dem rezessiven Zustand (logisch 1) überschreitet, verlieren all diejenigen Knoten den Wettstreit um die Busleitung, die rezessiv senden, aber auch den Bus dominant beobachten. Alle "Verlierer" werden automatisch zum Empfänger der Nachricht mit der höchsten Priorität und versuchen erst dann wieder zu senden, wenn der Bus frei wird.

Somit wird ein Bussystem zur Verfügung gestellt, das eine bedarfsabhängige Buszuteilung ausführt.

Auch gleichzeitige Buszugriffe mehrerer Knoten müssen immer zu einer eindeutigen Busvergabe führen. Durch das zuvor beschriebene Verfahren der bitweisen Arbitrierung über die Identifier der zur Übertragung anstehenden Botschaften wird jede Kollision nach einer berechenbaren Zeit eindeutig aufgelöst. Gemäß dem CAN-Standardformat sind es maximal 13 Bitzeichen, im erweiterten Format sind es maximal 33 Bitzeichen.

Wie der Natur des CAN-Busses zu entnehmen, werden Nachrichten auf dem Bussystem über die Busleitung mittels Datenpaketen ausgetauscht bzw. versendet. Eine Nachricht wird hierzu in der für das Bussystem spezifischen Frameform verpackt. Beispielsweise, wie zuvor schon angesprochen, kann hier das in dem DIN-Standard ISO 11898 definierte Format entsprechend angepasst und verwendet werden. Solch ein Datenpaket kann auch als "FRAME" bezeichnet werden. Ein FRAME besteht aus sieben Kennfeldern, nämlich der Startcondition, dem Message-Identifier, Steuerbits, Datenbits (0 - 8 Bites), Prüfbits, Acknowledge-Bits und Stop-Condition. Die Start-Condition und der Stop-Condition können zur Synchronisation verwendet werden.

FRAMES unterscheiden sich außerdem nach der Länge des Identifiers. Es gibt einmal den Standard-FRAME, der einen 11-Bit-Identifier aufweist und einmal den Extended-FRAME, der einen 29-Bit-Identifier aufweist. Gemäß einem Ausführungsbeispiel der vorliegenden Erfindung wird bevorzugt der Extended-FRAME mit einem 29-Bit-Identifier verwendet, der auch der folgenden Beschreibung zugrunde liegt. Der 29-Bit-Identifier des Datenpaketes kann auch als erweitertes Identifikationsfeld bezeichnet werden. Nach der Art des FRAMES kann auch zwischen Daten-FRAMES und Remote-Data-FRAMES unterschieden werden, wobei hier nicht näher auf diese Unterscheidung eingegangen wird.

Fig. 2 zeigt ein Ausführungsbeispiel eines erweiterten Identifikationsfeldes, das ein Teil das Datenpaketes in dem Bussystem gemäß der vorliegenden Erfindung ist. Wie Fig. 2 zu entnehmen ist, weist das erweiterte Identifikationsfeld oder der Extended-Identifier eine Länge von 29 Bits auf, wobei die Bits von den am wenigsten signifikanten Bits aufwärts zu den signifikantesten Bits nummeriert sind. Das Bit mit der niedrigsten Signifikanz LSB (least significant bit) ist das Bit 0 auf der rechten Seite und das Bit mit der höchsten Signifikanz MSB (most significant bit) ist das Bit 28 auf der linken Seite. Das erweiterte Identifikationsfeld, das in Fig. 2 dargestellt ist, ist mit der Bezugsziffer 2 bezeichnet. Die Bezugsziffer 4 in Fig. 2 bezeichnet die vier höchstwertigsten Bits des erweiterten Identifikationsfelds 2 und die Bezugsziffer 8 bezeichnet die sechs niederwertigsten oder mit niedrigster Signifikanz versehenen Bits des Identifikationsfeldes 2. Die Bits 6 bis 24, die zwischen der System-ID mit einer Länge von 6 Bits, die aus den Bits 0 bis 5 besteht, und der Nachrichtenpriorität angeordnet sind, die aus den Bits 25 bis 28 besteht, betreffen einen Funktionscode 6 der systemspezifisch ausgestaltet werden kann und eine Länge von 19 Bit aufweist. Der Funktionscode kann beispielsweise die von dem Empfänger der mit der System-ID adressiert wird, auszuführende Funktion bestimmen.

Gemäß einem Ausführungsbeispiel der vorliegenden Erfindung ermöglicht eine Priorisierung von hochkritischen Systemen, d.h. von Systemen mit höchster Kritikalität in einem Flugzeug, das, wenn gleichzeitig eine Vielzahl von Geräten oder Flugsystemen auf die Busleitung zugreifen, das System mit der höchsten Priorität tatsächlich auf die Busleitung zugreifen kann und das entsprechende Datenpaket versenden kann. Auf diese Art und Weise wird sichergestellt, dass es bei den kritischen Systemen zu keinerlei Verzögerungen kommt und eine sichere Übertragung gewährleistet wird.

Gemäß einem Ausführungsbeispiel der vorliegenden Erfindung ist die System-ID, die in dem erweiterten Identifikationsfeld in den Bits 0 bis 5 enthalten ist, auf der Grundlage von ATA Kapiteln des Flugsystems zugeordnet.

Der vollständige Name dieser Spezifikation lautet ATA iSpec 2200: Information Standards for Aviation Maintenance. Die ATA iSpec 2200 entstand im Jahre 2000 durch die Zusammenführung von den folgenden zwei Spezifikationen: ACA Spec 100: Manufactures Technical Data und ACA iSpec 2100: Digital Data Standards for Aircraft Support. Die ATA iSpec 2200 betrifft eine technische Dokumentation für die Flugzeuginstandhaltung. Sie umfasst einen industrieweiten Standard zur Nummerierung von Flugzeugsystemen. Das in der gesamten zivilen Luftfahrt in praktisch allen Bereichen anzutreffende Nummernsystem zur hierarchischen Gliederung des Flugzeugs in sogenannte "ATA-Kapitel" aus der ATA Spec 100 ist wesentlich. Dieses Nummernsystem wurde an neue technische Entwicklungen angepasst und ist nun auch in die ATA iSpec 2200 übernommen.

Da ein Flugzeug (gegebenenfalls nur unter gewissen Voraussetzungen) selbst dann betrieben werden darf, wenn einzelne Teile der Systemkomponenten ausgefallen sind, ist die Master-Minimum-Equipement-List (MMEL) in der ATA iSpec 2200 eine Aufstellung, die die als Minimum verfügbaren Komponenten enthält, die für einen sicheren Betrieb des Flugzeugs notwendig sind. Die MMEL ist Teil der Zulassungsunterlagen des Flugzeugs.

Die "ATA-Kapitel" als hierarchische Gliederung des Flugzeugs (ATA Break Down) ursprünglich veröffentlichten ATA iSpec 100, haben sich im gesamten zivilen Flugzeugbau durchgesetzt. Diese Kapitel oder Chapter sind eigentlich die Kapitel der Handbücher, unter anderem zu den Zellen und Triebwerksystemen. Die Flugzeugkomponenten, d.h. die Flugzeugsysteme werden durch einen Code identifiziert, der aus drei Elementen mit je zwei Ziffern besteht. Der Code 29-31-03 zeigt als Beispiel auf System 29, Subsystem 31 und Unit 03.

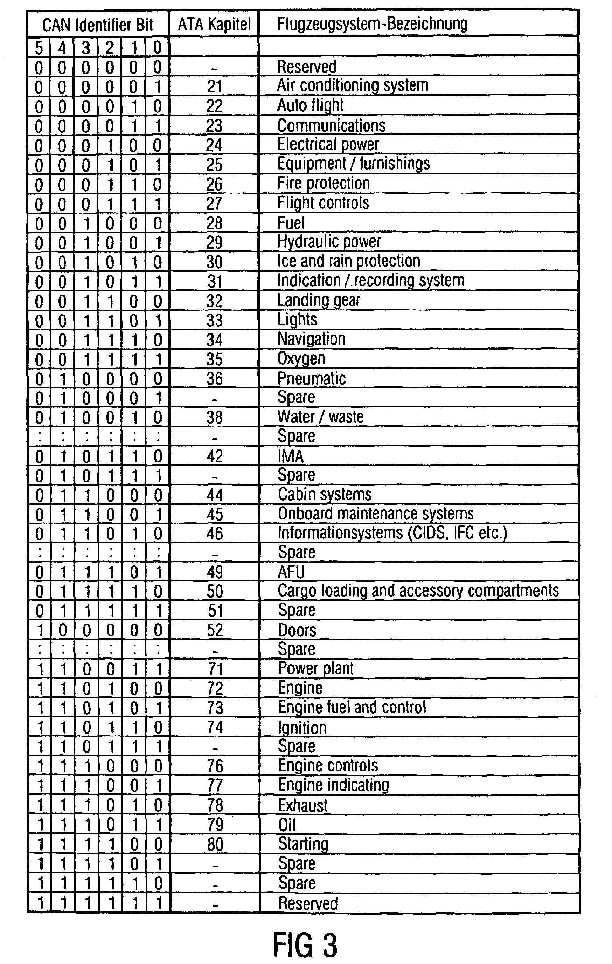

Fig. 3 zeigt ein Ausführungsbeispiel einer Tabelle, wie die System-IDs bezüglich den ATA-Kapiteln zugeordnet sind. In anderen Worten wird gemäß der vorliegenden Erfindung durch die System-ID eindeutig auf ein entsprechendes ATA-Kapitel verwiesen. Durch die Verwendung der ATA-Kapitel vereinfacht sich insbesondere die luftfahrttechnische Zulassbarkeit des Kommunikationsprotokolls für sicherheitskritische Anwendungen in einem Flugzeug.

Wie Fig. 3 zu entnehmen ist, sind die System-ID binär codiert und verweist eindeutig auf entsprechende ATA-Kapitel. So verweist beispielsweise die System-ID 110011 auf das ATA-Kapitel 71, das "power plant" betrifft.

In anderen Worten wird gemäß der vorliegenden Erfindung ein Bussystem zur Verfügung gestellt, in dem Datenpakete ein Identifikationsfeld aufweisen, dessen sechs niederwertigste Bits direkt mit ATA-Kapiteln, die eindeutig Flugzeugsysteme bezeichnen, in Verbindung stehen.

Es ist darauf hinzuweisen, dass die gewählte Codierung zwischen den ATA-Kapiteln und den System-IDs gemäß anderen Ausführungsbeispielen der vorliegenden Erfindung auch anders ausgestaltet werden kann und die Tabelle von Fig. 3 lediglich beispielhaft zu verstehen ist.

Vorteilhaft ermöglicht dies die Kommunikation von Applikationen und (Sub-)Systemen unterschiedlicher Kritikalität auf dem selben Datenbus Medium, d.h. auf der selben Busleitung, die, wie oben angesprochen, eine einfache Zweidrahtbusleitung sein kann. Durch die Verwendung eines gemeinsamen Datenbusmediums können flugzeugseitig Leistungsgewichte reduziert werden. Auch lässt sich ein Installationsaufwand reduzieren. Geräteseitig wird eine Vereinfachung durch Reduzierung der Steckergröße (Pin-Anzahl) sowie eine reduzierende Anzahl von geräteinternen Datenbus-Halbleiter-Bauelementen ermöglicht.

Vorteilhaft wird im Rahmen der luftfahrttechnischen Systemzulassung durch die Festlegung von Nachrichtenprioritäten bei der Kommunikation zwischen System/Geräten unterschiedlicher Kritikalität über ein gemeinsames Datenbus-Medium die luftfahrttechnische Zulassung vereinfacht bzw. für sicherheitskritische Funktionen überhaupt erst möglich.

Die Erfindung ermöglicht weiterhin eine Erweiterbarkeit des Datenbus-Systems bzw. das einfache Hinzufügen weiterer Geräte (z.B. im Rahmen einer kundenspezifischen Konfiguration des Flugzeugs oder bei der Hinzufügung zukünftiger neuer Anwendungen) ohne die Anwendung von Softwaremodifikationen bei bereits existierenden Geräten.

## Patentansprüche

1. Sender für einen CAN-Datenbus zum Senden eines Datenpakets mit einem erweiterten Identifikationsfeld (2) mit einer Länge von 29 Bits zur Identifikation eines Flugzeugsystems;
wobei die Bits der höchsten Signifikanz (4) des erweiterten Identifikationsfeldes (2) zur Festlegung einer Priorität des Datenpakets ausgestaltet sind, so dass ein Datenpaket für ein Flugzeugsystem mit hoher Kritikalität mit einer hohen Datenpaketpriorität adressiert werden kann;
wobei ein weiterer Bereich (6) des erweiterten Identifikationsfeldes (2) zur Definition eines Flugzeugsystem-spezifischen Funktionskodes ausgestaltet ist;
wobei die Bits der niedrigsten Signifikanz des erweiterten Identifikationsfeldes eine System-ID bezeichnen, und
wobei die System-ID binär codiert ist und auf ein ATA-Kapitel verweist, wodurch jedes Flugzeugsystem entsprechend eines ATA Kapitels adressierbar ist.

2. Sender nach Anspruch 1, wobei die System-ID eine Länge von 6 Bit aufweist.

3. Empfänger für einen CAN-Datenbus, zum Empfangen eines Datenpakets mit einem erweiterten Identifikationsfeld mit einer Länge von 29 Bits zur Identifikation eines Flugzeugsystems;
wobei der Empfänger eingerichtet ist, Bits der höchsten Signifikanz (4) des erweiterten Identifikationsfeldes (2) zur Festlegung einer Priorität des Datenpakets zu empfangen, so dass ein Datenpaket für ein Flugzeugsystem mit hoher Kritikalität mit einer hohen Datenpaketpriorität adressiert werden kann;
wobei ein weiterer Bereich (6) des erweiterten Identifikationsfeldes zur Definition eines Flugzeug-spezifischen Funktionskodes ausgestaltet ist;
wobei der Empfänger eingerichtet ist, anhand des erweiterten Identifikationsfeldes (2) festzustellen, ob die empfangenen Daten für den Empfänger relevant sind;
wobei die Bits der niedrigsten Signifikanz (8) des erweiterten Identifikationsfeldes (2)
eine System-ID bezeichnen; und
wobei die System-ID binär codiert ist und auf ein ATA-Kapitel verweist, wodurch jedes Flugzeugsystem entsprechend eines ATA Kapitels adressierbar ist.

4. Empfänger nach Anspruch 3, wobei die System-ID eine Länge von 6 Bit aufweist.

5. CAN-Bussystem zur Übertragung eines Datenpakets zwischen einer Vielzahl von Flugzeugsystemen in einem Flugzeug,
wobei die Flugzeugsysteme einen Sender nach einem der Ansprüche 1 bis 2 und einen Empfänger nach einem der Ansprüche 3 bis 4 aufweisen;

6. Verfahren zum Senden eines Datenpakets mit einem erweiterten Identifikationsfeld (2) mit einer Länge von 29 Bits zur Identifikation eines Flugzeugsystems, das Verfahren aufweisend:
Senden von Bits der höchsten Signifikanz (4) des erweiterten Identifikationsfeldes (2) zur Festlegung einer Priorität des Datenpakets, so dass ein Datenpaket für ein Flugzeugsystem mit hoher Kritikalität mit einer hohen Datenpaketpriorität adressiert werden kann;
Senden eines weiteren Bereichs (6) des erweiterten Identifikationsfeldes (2) welcher zur Definition eines Flugzeugsystem-spezifischen Funktionskodes ausgestaltet ist;
wobei die Bits der niedrigsten Signifikanz (8) des erweiterten Identifikationsfeldes
eine System-ID bezeichnen; und wobei die System-ID binär codiert ist und auf ein ATA-Kapitel verweist, wodurch jedes Flugzeugsystem entsprechend eines ATA Kapitels adressierbar ist.

7. Verfahren zum Empfangen eines Datenpakets mit einem erweiterten Identifikationsfeld (2) mit einer Länge von 29 Bits, das Verfahren aufweisend:
Festlegen der Priorität des Datenpakets anhand von Bits der höchsten Signifikanz (4) des erweiterten Identifikationsfeldes (2) so dass ein Datenpaket für einen Empfänger mit hoher Kritikalität mit einer hohen Datenpaketpriorität adressiert werden kann;
wobei ein weiterer Bereich (6) des erweiterten Identifikationsfeldes (2) zur Definition eines Flugzeugsystem-spezifischen Funktionskodes ausgestaltet ist;
Feststellen anhand des erweiterten Identifikationsfeldes (2), ob die empfangenen Daten für den Empfänger relevant sind;
wobei die Bits der niedrigsten Signifikanz (8) des erweiterten Identifikationsfeldes (2)
eine System-ID bezeichnen; und
wobei die System-ID binär codiert ist und auf ein ATA-Kapitel verweist, wodurch jedes Flugzeugsystem entsprechend eines ATA Kapitels adressierbar ist.

## Claims

1. A transmitter for a CAN data bus for transmitting a data packet, the data packet having an expanded identification field (2) having a length of 29 bits for the identification of an aircraft system;
wherein the bits of the highest significance (4) of the expanded identification field (2) are adapted for determining a priority of the data packet, so that a data packet for an aircraft system having a high criticality can be addressed using a high data packet priority;
wherein a further region (6) of the expanded identification field (2) is adapted for the definition of an aircraft-system-specific function code;
wherein the bits of the lowest significance of the expanded identification field identify a system ID; and
wherein the system ID is binary coded and refers to an ATA chapter, through which each aircraft system is addressable corresponding to an ATA chapter.

2. The sender according to claim 1, wherein the system ID has a length of 6 bits.

3. A receiver for a CAN data bus for receiving a data packet, the data packet having an expanded identification field having a length of 29 bits for the identification of an aircraft system;
wherein the receiver is adapted to receive bits of the highest significance (4) of the expanded identification field (2) for determining a priority of the data packet, so that a data packet for an aircraft system having a high criticality can be addressed using a high data packet priority;
wherein a further region (6) of the expanded identification field (2) is adapted for the definition of an aircraft-specific function code;
wherein the receiver is adapted to determine on the basis of the expanded identification field (2) whether the data received is relevant for the receiver;
wherein the bits of the lowest significance (8) of the expanded identification field (2) identify a system ID; and
wherein the system ID is binary coded and refers to an ATA chapter, through which each aircraft system is addressable corresponding to an ATA chapter.

4. The receiver according to claim 3, wherein the system ID has a length of 6 bits.

5. A CAN bus system for transmitting a data packet between multiple aircraft systems in an aircraft,
wherein the aircraft systems comprise a sender according to one of claims 1 to 2 and a receiver according to one of claims 3 to 4.

6. A method for transmitting a data packet, the data packet having an expanded identification field (2) having a length of 29 bits for the identification of an aircraft system , the method comprising:
transmitting bits of the highest significance (4) of the expanded identification field (2) for determining a priority of the data packet, so that a data packet for an aircraft system having a high criticality can be addressed using a high data packet priority;
transmitting of a further region (6) of the expanded identification field (2) which region is adapted for the definition of an aircraft-system-specific function code;
wherein the bits of the lowest significance (8) of the expanded identification field identify a system ID; and
wherein the system ID is binary coded and refers to an ATA chapter, through which each aircraft system is addressable corresponding to an ATA chapter.

7. A method for receiving a data packet, the data packet having an expanded identification field (2) having a length of 29 bits, the method comprising:
determining the priority of the data packet on the basis of the highest significance (4) of the expanded identification field (2), so that a data packet for a receiver having a high criticality can be addressed using a high data packet priority;
wherein a further region (6) of the expanded identification field (2) is adapted for the definition of an aircraft-specific function code;
determining on the basis of the expanded identification field (2) whether the data received is relevant for the receiver;
wherein the bits of the lowest significance (8) of the expanded identification field (2) identify a system ID; and
wherein the system ID is binary coded and refers to an ATA chapter, through which each aircraft system is addressable corresponding to an ATA chapter.

## Revendications

1. Emetteur pour un bus de données CAN destiné à l'émission d'un paquet de données avec un champ d'identification élargi (2) d'une longueur de 29 bits pour l'identification d'un système d'avion ;
les bits de la signification maximale (4) du champ d'identification élargi (2) étant configurés pour la définition d'une priorité du paquet de données, de sorte qu'un paquet de données pour un système d'avion de haute criticité peut être adressé avec une priorité élevée du paquet de données ;
une autre zone (6) du champ d'identification élargi (2) étant configurée pour la définition d'un code de fonction spécifique à un système d'avion ;
les bits de la signification minimale du champ d'identification élargi désignant une ID de système; et
l'ID de système étant codée en binaire et renvoyant à un chapitre ATA, n'importe quel système d'avion étant adressable de ce fait en correspondance avec un chapitre ATA.

2. Emetteur selon la revendication 1, l'ID de système présentant une longueur de 6 bits.

3. Récepteur pour un bus de données CAN, destiné à la réception d'un paquet de données avec un champ d'identification élargi d'une longueur de 29 bits pour l'identification d'un système d'avion ;
le récepteur étant conçu pour recevoir des bits de la signification maximale (4) du champ d'identification élargi (2) en vue de définir une priorité du paquet de données, de sorte qu'un paquet de données pour un système d'avion de haute criticité peut être adressé avec une priorité élevée du paquet de données ;
une autre zone (6) du champ d'identification élargi étant configurée pour la définition d'un code de fonction spécifique à un avion ;
le récepteur étant conçu pour détecter, à l'aide du champ d'identification élargi (2), si les données reçues sont pertinentes pour le récepteur ;
les bits de la signification minimale (8) du champ d'identification élargi (2) désignant une ID de système; et
l'ID de système étant codée en binaire et renvoyant à un chapitre ATA, n'importe quel système d'avion étant adressable de ce fait en correspondance avec un chapitre ATA.

4. Récepteur selon la revendication 3, l'ID de système présentant une longueur de 6 bits.

5. Système de bus CAN pour la transmission d'un paquet de données entre une multiplicité de systèmes d'avion dans un avion,
les systèmes d'avion présentant un émetteur selon l'une des revendications 1 et 2 et un récepteur selon l'une des revendications 3 et 4.

6. Procédé d'émission d'un paquet de données avec un champ d'identification élargi (2) d'une longueur de 29 bits pour l'identification d'un système d'avion, le procédé comprenant :
l'émission de bits de signification maximale (4) du champ d'identification élargi (2) en vue de définir une priorité du paquet de données, de sorte qu'un paquet de données pour un système d'avion de haute criticité peut être adressé avec une priorité élevée du paquet de données ;
l'émission d'une autre zone (6) du champ d'identification élargi (2), configurée pour la définition d'un code de fonction spécifique d'un système d'avion ;
les bits de la signification minimale (8) du champ d'identification élargi désignant une ID de système; et
l'ID de système étant codée en binaire et renvoyant à un chapitre ATA, n'importe quel système d'avion étant de ce fait adressable en correspondance avec un chapitre ATA.

7. Procédé de réception d'un paquet de données avec un champ d'identification élargi (2) d'une longueur de 29 bits, le procédé comprenant :
la définition de la priorité du paquet de données à l'aide de bits de la signification maximale (4) du champ d'identification élargi (2), de sorte qu'un paquet de données pour un récepteur de haute criticité peut être adressé avec une priorité élevée du paquet de données ;
une autre zone (6) du champ d'identification élargi (2) étant configurée pour la définition d'un code de fonction spécifique d'un système d'avion ;
la détection, à l'aide du champ d'identification élargi (2), de l'éventuelle pertinence des données reçues pour le récepteur ;
les bits de la signification minimale (8) du champ d'identification élargi (2) désignant une ID de système; et
l'ID de système étant codée en binaire et renvoyant à un chapitre ATA, n'importe quel système d'avion étant de ce fait adressable en correspondance avec un chapitre ATA.
